# EUROPEAN PATENT APPLICATION

(11) **EP 4 814 541 A1**
(43) Date of publication of application: **30.09.2026**
(21) Application number: 24905867.8
(22) Date of filing: 01.11.2024
(51) Int. Cl.: G01S 17/10, G01S 7/4861

(54) **DETECTION METHOD, DETECTION APPARATUS AND TERMINAL DEVICE**

(30) Priority: 19.12.2023 CN 202311760881
(71) Applicant: Huawei Technologies Co., Ltd., Shenzhen, Guangdong 518129 (CN)
(72) Inventor: YU, Zhong, Shenzhen, Guangdong 518129 (CN); YUE, Chaolei, Shenzhen, Guangdong 518129 (CN); SHI, Xianling, Shenzhen, Guangdong 518129 (CN); CAO, Guoliang, Shenzhen, Guangdong 518129 (CN)
(74) Representative: Gill Jennings & Every LLP
(86) International application number: PCT/CN2024/129381
(87) International publication number: WO 2025/130379

(57) **Abstract**

This application provides a detection method, a detection apparatus, and a terminal device. The method includes: The detection apparatus transmits a first pulse sequence. The first pulse sequence includes a first pulse signal, the first pulse signal includes a main pulse signal and a sub-pulse signal, and an amplitude of the sub-pulse signal is less than an amplitude of the main pulse signal. In different application scenarios, the detection apparatus may adaptively select a proper first pulse signal to be included in the first pulse sequence, so that the transmitted pulse sequence can fit the application scenario of the detection apparatus, and good detection effect can be obtained. In this way, detection performance of the detection apparatus can be improved.

## Description

### CROSS-REFERENCE TO RELATED APPLICATIONS

This application claims priority to Chinese Patent Application No. 202311760881.2, filed with the China National Intellectual Property Administration on December 19, 2023 and entitled "DETECTION METHOD, DETECTION APPARATUS, AND TERMINAL DEVICE", which is incorporated herein by reference in its entirety.

### TECHNICAL FIELD

This application relates to the field of laser detection technologies, and in particular, to a detection method, a detection apparatus, and a terminal device.

### BACKGROUND

A lidar (light detection and ranging, LiDAR) is a radar system that detects characteristic quantities such as a position and a speed of a target by emitting a laser beam. A working principle of the lidar is as follows: The lidar transmits a detection signal (for example, a laser pulse) to the target (for example, a vehicle, an airplane, or a pedestrian), then performs comparison between and processing on a received signal (an echo signal) reflected from the target and the transmitted detection signal, to obtain related information about the target, for example, parameters such as a distance, an orientation, a height, a speed, an attitude, and even a shape of the target, so that the target can be detected, tracked, and recognized. With development of lidar technologies, increasing lidars are used in applications such as advanced driving assistant system (advanced driving assistant system, ADAS) system, gesture recognition, and three-dimensional (three-dimensional, 3D) mapping. Especially in the field of intelligent driving, with a trend of sensor fusion, the lidar combines imaging, ultrasonic, and millimeter-wave radars to provide comprehensive perception for a vehicle, which helps quickly identify ambient environment information of the vehicle.

Currently, the lidar covers a large quantity of scenarios. For example, the covered scenarios include a low-reflectivity target (for example, a black vehicle or a tire) and a high-reflectivity target (for example, a corner reflector such as a license plate, a road plate, or a reflective strip). As a result, a requirement for accurate measurement of the lidar changes dynamically and greatly (for example, a reflectivity of a detection target changes dynamically between 2% to 100000%). However, for different targets, a detector in the lidar has different response capabilities to echo signals (for example, laser pulse echoes) with different powers (or different waveforms). For example, although a high transmit power can ensure detection performance of the lidar for a long-distance target, a dynamic requirement of the lidar for a short-distance target cannot be met because an echo signal received by the lidar is excessively likely to be saturated. Although a low transmit power can ensure detection performance of the lidar for a short-distance target and help reduce dead zones, the lidar cannot detect a long-distance target because the transmit power is low. Therefore, a design scheme of the lidar needs to be further studied currently.

### SUMMARY

This application provides a detection method, a detection apparatus, and a terminal device, to improve detection performance of the detection apparatus.

According to a first aspect, this application provides a detection method. The method is applicable to a detection apparatus. The method includes: The detection apparatus transmits a first pulse sequence, where the first pulse sequence includes a first pulse signal, the first pulse signal includes a main pulse signal and a sub-pulse signal, and an amplitude of the sub-pulse signal is less than an amplitude of the main pulse signal.

In this method, in different application scenarios (or environments), the detection apparatus may adaptively select a proper first pulse signal to be included in the first pulse sequence, so that the transmitted pulse sequence can fit the application scenario of the detection apparatus, and good detection effect can be obtained. In this way, detection performance of the detection apparatus can be improved.

In a possible design, the main pulse signal and the sub-pulse signal may have different shapes.

In the foregoing design, the main pulse signal and the sub-pulse signal have different shapes, so that the detection apparatus can obtain good detection effect based on features of the first pulse signal.

In a possible design, the main pulse signal is adjacent to the sub-pulse signal, or the main pulse signal partially overlaps the sub-pulse signal.

It may be understood that, that the main pulse signal is adjacent to the sub-pulse signal may mean that the main pulse signal is adjacent to the sub-pulse signal at a specific interval, or may mean that the main pulse signal and the sub-pulse signal are adjacent based on a connection relationship.

In the foregoing design, based on different connection relationships (for example, adjacency or partial overlap) between the main pulse signal and the sub-pulse signal, different first pulse signals can be formed. In this way, the detection apparatus can flexibly select matched first pulse signals for detection (or transmission) in different use scenarios, to obtain good detection effect.

In a possible design, there is a minimum value point at a connecting point between the main pulse signal and the sub-pulse signal.

In the foregoing design, there is the minimum value point at the connecting point between the main pulse signal and the sub-pulse signal. In this way, whether a pulse signal included in the first pulse sequence includes a main pulse signal and a sub-pulse signal may be identified based on this feature. This can help assist the detection apparatus in accurately selecting, in a timely manner, an echo signal corresponding to a pulse signal including a main pulse signal and a sub-pulse signal to perform a corresponding operation.

In a possible design, when the first pulse signal has only one peak, the first pulse signal is divided into three pulse signals by using a half-height position point of a peak value (that is, a position point at which a half of the peak value is located) as a division boundary (or may be understood as a distinguishing boundary). A pulse signal including the peak in the three pulse signals is the main pulse signal, and remaining pulse signals are sub-pulse signals.

In a possible design, the first pulse sequence further includes a second pulse signal, and the second pulse signal is different from the first pulse signal in at least one of the following parameters: a transmit power, a peak power, a pulse width, a rising edge slope, a falling edge slope, a sub-pulse width, a sub-pulse amplitude, a rising edge area proportion, or a falling edge area proportion.

In the foregoing design, the first pulse sequence includes different pulse signals for detection. In this way, performance advantages of different pulse signals in different scenarios can be integrated, to improve overall performance and a scenario coverage capability of the detection apparatus.

In a possible design, a pulse width of the first pulse signal is greater than a pulse width of the main pulse signal, and an amplitude of the first pulse signal is equal to the amplitude of the main pulse signal.

For example, the amplitude of the main pulse signal may be used as the amplitude of the first pulse signal, and a sum of the width of the main pulse signal, a width of the sub-pulse signal, and an interval (or may be referred to as a spacing) between the main pulse signal and the sub-pulse signal may be used as the width of the first pulse signal.

In a possible design, the main pulse signal may be before the sub-pulse signal, or the main pulse signal may be after the sub-pulse signal.

In the foregoing design, based on different position relationships between the main pulse signal and the sub-pulse signal, different first pulse signals can be formed. In this way, the detection apparatus can flexibly select matched first pulse signals for detection in different use scenarios, to obtain good detection effect.

In a possible design, a time interval between the main pulse signal and the sub-pulse signal is less than dead time of a detector, and the width of the first pulse signal is slightly larger than the dead time of the detector.

In the foregoing design, small energy of the sub-pulse can be used to provide a large dynamic in a phase in which the detector recovers a detection capability, and an echo intensity of a high-reflectivity target can be further distinguished.

In a possible design, a pulse width and an amplitude of the sub-pulse signal are adjustable.

In the foregoing design, one or more of the pulse width and the amplitude of the sub-pulse signal are adjusted, so that different first pulse signals can be formed. In this way, the detection apparatus can flexibly select matched first pulse signals for detection in different use scenarios, to obtain good detection effect.

In a possible design, there are several possible driving manners for the main pulse signal and the sub-pulse signal:

Manner 1: One or more drive sources may drive a same laser to generate the main pulse signal and the sub-pulse signal.

Manner 2: One drive source may drive one laser to generate the main pulse signal, and one or more drive sources may drive one laser to generate the sub-pulse signal.

Manner 3: One drive source may drive one laser to generate the main pulse signal, and a plurality of drive sources may separately and correspondingly drive one laser to generate the sub-pulse signal.

In the foregoing design, driving manners for the main pulse signal and the sub-pulse signal are flexible and diversified, so that use requirements of different users or application requirements of different scenarios can be met.

In a possible design, the method further includes: The detection apparatus may receive a first echo sequence, where the first echo sequence includes a plurality of echo signals. Then, the detection apparatus may select, from the plurality of echo signals, a target echo signal that matches a to-be-measured indicator. Then, the detection apparatus may process the target echo signal to obtain a measurement result of a first target.

For example, the plurality of echo signals may include reflected signals corresponding to all detection signals, or may include only reflected signals corresponding to a part of detection signals, or may further include some interference signals. This is not specifically limited.

In the foregoing design, the detection apparatus may adaptively select a proper (or matched) target echo signal based on the to-be-measured indicator (or a function requirement or a scenario requirement), to further determine whether a measurement result of the to-be-measured indicator meets a performance requirement of the detection apparatus, to help accurately determine whether a pulse sequence to be transmitted next time needs to be adjusted, so that performance coverage of the detection apparatus in different scenarios can be implemented.

In a possible design, when the to-be-measured indicator is an intensity, the target echo signal may be an echo signal corresponding to the first pulse signal.

In the foregoing design, for the to-be-measured indicator being the intensity, the echo signal corresponding to the first pulse signal is preferably selected from the plurality of echo signals to implement measurement of the intensity. This helps more accurately determine whether a measured value of the intensity meets the performance requirement of the detection apparatus, so that whether the pulse sequence to be transmitted next time needs to be adjusted can be accurately determined.

In a possible design, when the to-be-measured indicator is a distance, the target echo signal may be an echo signal corresponding to a third pulse signal, where a transmit power of the third pulse signal is within a transmit power range.

In the foregoing design, for the to-be-measured indicator being the distance, the echo signal corresponding to the third pulse signal is preferably selected from the plurality of echo signals to implement measurement of the distance. This helps more accurately determine whether a measured value of the distance meets the performance requirement of the detection apparatus, so that whether the pulse sequence to be transmitted next time needs to be adjusted can be accurately determined.

In a possible design, when the to-be-measured indicator is an interference degree, if echo signals of the first target and a second target overlap, the target echo signal may be an echo signal corresponding to a fourth pulse signal, where a pulse width of the fourth pulse signal is less than or equal to a width threshold.

In the foregoing design, for the to-be-measured indicator being the interference degree, when the echo signals of the first target and the second target overlap, the echo signal corresponding to the fourth pulse signal is preferably selected from the plurality of echo signals to implement measurement of the interference degree. This helps more accurately determine whether a measured value of the interference degree meets the performance requirement of the detection apparatus, so that whether the pulse sequence to be transmitted next time needs to be adjusted can be accurately determined.

In a possible design, the method further includes: The detection apparatus may transmit a second pulse sequence when the measurement result does not meet a measurement requirement, where the second pulse sequence is different from the first pulse sequence.

For example, a pulse signal (or a signal in another form) included in the second pulse sequence is different from a pulse signal (or a signal in another form) included in the first pulse sequence in at least one of the following parameters: a transmit power, a peak power, a pulse width, a rising edge slope, a falling edge slope, a sub-pulse width, a sub-pulse amplitude, a rising edge area proportion, or a falling edge area proportion.

For example, the parameter is the sub-pulse width or the sub-pulse amplitude. If a sub-pulse width of the pulse signal included in the second pulse sequence is greater than a sub-pulse width of the pulse signal included in the first pulse sequence, and/or a sub-pulse amplitude of the pulse signal included in the second pulse sequence is greater than a sub-pulse amplitude of the pulse signal included in the first pulse sequence, the detector in the detection apparatus can obtain a dynamic range, so that the detection apparatus can dynamically adjust the dynamic range of the detector according to an actual scenario requirement.

Alternatively, for example, the parameter is the rising edge slope. If a rising edge slope of the pulse signal included in the second pulse sequence is less than a rising edge slope of the pulse signal included in the first pulse sequence, impact of insufficient sampling precision can be reduced, which helps improve measurement precision of the detection apparatus in a configuration of low sampling precision.

In the foregoing design, when the measurement result does not meet the measurement requirement, the detection apparatus may adaptively adjust a corresponding parameter of the pulse signal, so that a pulse sequence (for example, the second pulse sequence) to be transmitted next time is different from the first pulse sequence (for example, some pulse signals are different or all pulse signals are different). In this way, the detection apparatus can adaptively select a proper pulse signal for detection based on a scenario, to meet performance requirements of the detection apparatus in different scenarios.

According to a second aspect, this application provides a detection apparatus. The detection apparatus is configured to implement the method according to the first aspect or any possible design of the first aspect, and is configured to separately implement the steps in the foregoing method. Functions may be implemented by hardware, or may be implemented by executing corresponding software by hardware. The hardware or software includes one or more modules corresponding to the foregoing functions.

In a possible implementation, the detection apparatus may be an independent detection apparatus, or may be a module used in the detection apparatus, for example, a chip, a chip system, or a circuit. For beneficial effects, refer to the descriptions of the first aspect. Details are not described herein. The detection apparatus may include an interface circuit and at least one processor. The processor may be configured to support the detection apparatus in performing the method according to the first aspect or any possible design of the first aspect. The interface circuit is configured to support communication between the detection apparatus and another detection apparatus, another apparatus, and the like. The interface circuit may be an independent receiver, an independent transmitter, an input/output port integrating a transceiver function, or the like. Optionally, the detection apparatus may further include a memory. The memory may be coupled to the processor, and the memory stores program instructions and data that are necessary for the detection apparatus.

According to a third aspect, this application provides a detection apparatus. The detection apparatus is configured to implement the method according to the first aspect or any possible design of the first aspect, and includes corresponding functional modules separately configured to implement the steps in the foregoing method. Functions may be implemented by hardware, or may be implemented by executing corresponding software by hardware. The hardware or software includes one or more modules corresponding to the foregoing functions.

In a possible implementation, the detection apparatus may include a transmitting module, a receiving module, and a processing module. Optionally, the detection apparatus may further include a control module. The transmitting module is configured to perform a transmission-related operation according to the first aspect or any possible design of the first aspect. The receiving module is configured to perform a receiving-related operation according to the first aspect or any design of the first aspect. The processing module is configured to perform a processing-related operation according to the first aspect or any design of the first aspect, for example, configured to process a first echo sequence. Optionally, the control module may be configured to perform a control-related operation according to the first aspect or any design of the first aspect, for example, configured to control the transmitting module to perform a corresponding transmission operation, or configured to control the receiving module to perform a corresponding receiving operation, or configured to control the processing module to perform a corresponding processing operation.

In another possible implementation, the detection apparatus may include a processor and a transceiver. The processor and the transceiver may perform the method according to the first aspect or any possible design of the first aspect. For details, refer to detailed descriptions in the method example. Details are not described herein again.

According to a fourth aspect, this application provides a terminal device, including the detection apparatus according to either of the second aspect and the third aspect. For example, examples of the terminal device include but are not limited to a smart home device (for example, a television, a robotic vacuum cleaner, a smart desk lamp, a speaker system, an intelligent light system, an electrical appliance control system, home background music, a home theater system, an intercom system, or video surveillance), an intelligent transportation device (for example, a vehicle, a ship, an unmanned aerial vehicle, a train, a van, or a truck), an intelligent manufacturing device (for example, a robot, an industrial device, intelligent logistics, or a smart factory), and a smart terminal (a mobile phone, a computer, a tablet computer, a palmtop computer, a desktop computer, a headset, acoustic equipment, a wearable device, a vehicle-mounted device, a virtual reality device, an augmented reality device, or the like).

According to a fifth aspect, this application provides a computer-readable storage medium. The computer-readable storage medium stores a computer program. When the computer program is run, the method according to the first aspect or any possible design of the first aspect is performed.

According to a sixth aspect, this application provides a computer program product. When the computer program product is run on a processor, the method according to the first aspect or any possible design of the first aspect is implemented.

In this application, on the basis of the implementations according to the foregoing aspects, the implementations may be further combined to provide more implementations.

### BRIEF DESCRIPTION OF DRAWINGS

FIG. 1 shows an example of a diagram of a possible application scenario according to an embodiment of this application;
FIG. 2 shows an example of a diagram of an architecture of a detection apparatus according to an embodiment of this application;
FIG. 3 shows an example of a schematic flowchart of a detection method according to an embodiment of this application;
FIG. 4a shows an example of a diagram of a first pulse signal according to an embodiment of this application;
FIG. 4b shows an example of a diagram of another first pulse signal according to an embodiment of this application;
FIG. 4c shows an example of a diagram of still another first pulse signal according to an embodiment of this application;
FIG. 4d shows an example of a diagram of still another first pulse signal according to an embodiment of this application;
FIG. 4e shows an example of a diagram of still another first pulse signal according to an embodiment of this application;
FIG. 4f shows an example of a diagram of still another first pulse signal according to an embodiment of this application;
FIG. 5a shows an example of a diagram of a driving manner for a main pulse signal and a sub-pulse signal according to an embodiment of this application;
FIG. 5b shows an example of a diagram of another driving manner for a main pulse signal and a sub-pulse signal according to an embodiment of this application;
FIG. 5c shows an example of a diagram of still another driving manner for a main pulse signal and a sub-pulse signal according to an embodiment of this application;
FIG. 5d shows an example of a diagram of still another driving manner for a main pulse signal and a sub-pulse signal according to an embodiment of this application;
FIG. 5e shows an example of a diagram of still another driving manner for a main pulse signal and a sub-pulse signal according to an embodiment of this application;
FIG. 5f shows an example of a diagram of still another driving manner for a main pulse signal and a sub-pulse signal according to an embodiment of this application; and
FIG. 6 shows an example of a diagram of a structure of a detection apparatus according to an embodiment of this application.

### DESCRIPTION OF EMBODIMENTS

Before technical solutions provided in this application are described, some terms in this application are first explained and described, to facilitate understanding by a person skilled in the art.
(1) Pulse signal: The pulse signal is a discrete signal with various shapes. The pulse signal is different from a common analog signal (such as a sine wave) in that waveforms are discontinuous in a time axis (where there is a clear interval between waveforms) but exhibit specific periodicity.
(2) Dead time: The dead time indicates a period of time during which a system cannot record subsequent events after each event (event) occurs. For example, for a detector, an event is a photon response. During the dead time, new photons cannot be detected by the detector again.
(3) Dynamic range: The dynamic range indicates a capability of a detection apparatus to identify a range between a strongest signal and a weakest signal, and is usually expressed in dB.
(4) Adhesion: Adhesion is a "blurring" phenomenon that occurs, between adjacent targets, in point clouds obtained by a detection apparatus (such as a lidar). The phenomenon causes the targets to be indistinguishable.

The following describes in detail embodiments of this application with reference to accompanying drawings.

The following describes possible application scenarios to which a detection method provided in this application is applicable. It should be noted that the descriptions are intended for ease of understanding by a person skilled in the art, but not to limit the protection scope claimed in this application.

In a possible implementation, the detection method may be applied to a detection apparatus, and the detection apparatus may be mounted on a vehicle. For example, the detection apparatus may be, for example, a lidar (for example, a time of flight (time of flight, TOF) lidar).

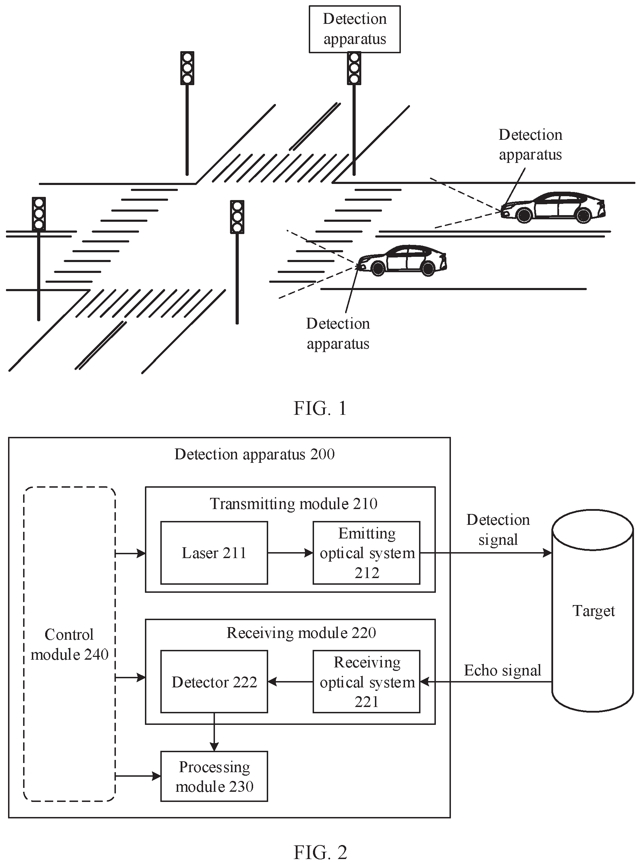

FIG. 1 shows an example of a diagram of a possible application scenario according to an embodiment of this application. In this application scenario, for example, the detection apparatus is mounted at a vehicle head bumper. The detection apparatus may sense a sector area shown in a dashed box, and the sector area may be referred to as a detection area of the detection apparatus. It should be understood that the detection apparatus may alternatively be mounted in any one or more of the following six directions: the front, the back, the left, the right, the top, and the bottom of a vehicle, for example, around a vehicle light, around a rear-view mirror, near a vehicle door, at a vehicle rear bumper, behind a windshield, or on the top of the vehicle, to capture ambient environment information of the vehicle. When the detection apparatus is mounted behind the windshield, the detection apparatus has a low requirement on no risk of crushed stone collision, and a field of view (field of view, FOV) can be aligned without affecting an appearance of the vehicle. In addition, a front windshield has window heating, defogging, and wiper cleaning functions.

A working principle of the detection apparatus is as follows: The detection apparatus transmits a detection signal (for example, a laser pulse) to the detection area. If a target exists in the detection area, the target may reflect the received detection signal back to the detection apparatus (where the reflected detection signal may be referred to as an echo signal), and the detection apparatus determines association information of the target after processing the echo signal. For example, the detection apparatus may obtain physical environment information around a vehicle body in real time or periodically, for example, information in a plurality of dimensions such as a relative distance (range), a relative velocity (velocity), and relative angles (for example, a horizontal angle (azimuth angle) and an elevation (elevation) angle) between the vehicle and another object, and then perform target tracking, recognition, and classification based on the detected physical environment information, to perform data fusion with reference to dynamic information of the vehicle body. After a proper decision is made, a driver is notified or warned in various manners, such as sound, light, and tactile sense, or the vehicle is actively intervened in time, to ensure safety and comfort of a driving process, and reduce an accident occurrence probability. Currently, the vehicle can implement advanced driving assistant system (advanced driving assistant system, ADAS) functions such as adaptive cruise control (adaptive cruise control), forward collision warning (forward collision warning), blind spot detection (blind spot detection), parking aid (parking aid), and lane change assistant (lane change assistant) by using a millimeter-wave radar, so that assisted driving or autonomous driving of the vehicle can be implemented.

It should be understood that the foregoing application scenario is merely an example. The detection apparatus provided in embodiments of this application may be alternatively used in another possible scenario, which is not limited to the scenario in the foregoing example. For example, the detection apparatus may alternatively be mounted in the vehicle, and is configured to dynamically detect a living target in the vehicle. Alternatively, the detection apparatus may be mounted on a roadside traffic radar, and is configured to perform violation detection on a vehicle passing through a surrounding road, or monitor a congestion degree of a current traffic environment, and perform evacuation in a timely manner, or communicate with the vehicle, to implement intelligent vehicle-road cooperative communication and the like. Alternatively, the detection apparatus may be mounted on an airplane, for example, an unmanned aerial vehicle, a passenger aircraft, a forest protection machine, or an aerial surveying machine, and is configured to monitor an obstacle in a flight environment, and avoid the obstacle in a timely manner, to reduce accidents. For another example, the detection apparatus may alternatively be mounted on a ship as a shipborne detection apparatus, and is configured to assist the ship in safe driving. For another example, the detection apparatus may alternatively be used in a terminal device, or disposed in a component of a terminal device. The terminal device may be, for example, a smart home device (for example, configured for non-privacy detection), a smart manufacturing device (for example, configured to monitor an operating status), a robot, or an intelligent transportation device. The intelligent transportation device may be, for example, an automated guided vehicle (automated guided vehicle, AGV) or an unmanned transportation vehicle. Details are not enumerated herein. The AGV is a transport vehicle equipped with an automatic navigation apparatus such as an electromagnetic or optical apparatus, capable of traveling along a specified navigation path, and having safety protection and various transport functions.

It should be noted that the application scenarios described in this application are intended to describe the technical solutions in this application more clearly, and do not constitute a limitation on the technical solutions provided in this application. For example, the foregoing application scenarios may be applied to fields such as unmanned driving, autonomous driving, assisted driving, intelligent driving, networked vehicles, security surveillance, biomedical care, or surveying and mapping (for example, three-dimensional drawing). With evolution of the application scenario, the detection method provided in embodiments of this application is also applicable to a similar technical problem. This is not specifically limited in this application.

At present, in a working process of a lidar, a waveform (or may be understood as a form) of a transmitted pulse signal is simple (or may be understood as being fixed). For example, a waveform of a pulse signal transmitted by the lidar at a low transmit power can ensure detection performance of the lidar for a short-distance target, but a long-distance target cannot be detected. Therefore, it is difficult to meet a detection performance requirement of the lidar through transmission of a pulse signal of a single waveform. In view of this, this application provides a detection method, to implement adjustable transmission of a pulse signal, so that detection performance of a detection apparatus can be improved.

The following first describes an architecture of the detection apparatus to which the detection method provided in embodiments of this application may be applied.

FIG. 2 shows an example of a diagram of an architecture of a detection apparatus according to an embodiment of this application. As shown in FIG. 2, the detection apparatus 200 may include a transmitting module 210, a receiving module 220, and a processing module 230. Optionally, the detection apparatus 200 further includes a control module 240.

The transmitting module 210 is configured to transmit a pulse sequence (including one or more pulse signals). The receiving module 220 is configured to receive an echo sequence (including an echo signal corresponding to the one or more pulse signals) corresponding to the pulse sequence. The processing module 230 is configured to process the echo sequence.

For example, the transmitting module 210 may include a laser 211 and an emitting optical system 212. The receiving module 220 may include a receiving optical system 221 and a detector 222. In the detection apparatus 200, the control module 240 may have a signal control capability, and may be connected to other components in the detection apparatus 200 through a controller area network (controller area network, CAN) bus or in another manner. The other components, for example, include but are not limited to the transmitting module 210, the receiving module 220, and the processing module 230. The laser 211 is a device that can emit laser light, and a type of the laser may be any one of a semiconductor laser, a gas laser, a fiber laser, a solid-state laser, a dye laser, a diode laser, an excimer laser, or the like. The emitting optical system 212 and the receiving optical system 221 are systems including optical elements. The optical elements include but are not limited to a lens, a light filter, a polarizer, a reflection mirror, a beam splitter, a prism, a window plate, a scattering sheet, and the like. For example, the lens may be a simple spherical lens or an aspheric lens, for example, a concave lens or a convex lens. A single lens may be a convex lens. A lens group may be a combination of the convex lens and the concave lens, or may be a combination of concave lenses, or a combination of convex lenses. The convex lenses and the concave lenses have a plurality of different shapes. For example, the convex lenses include a biconvex lens, a plano-convex lens, and a concavo-convex lens, and the concave lenses include a biconcave lens, a plano-concave lens, and a concavo-convex lens. Specific shapes of the convex lens and the concave lens are not limited herein. Any single lens or any combination of lenses that can emit a laser beam from the laser to a detection area to a greatest extent is applicable to this application. The detector 222 may include but is not limited to an avalanche diode (avalanche photodiode, APD), a single photon avalanche diode (single photon avalanche diode, SPAD), a photodiode (positive intrinsic-negative, PIN), a silicon photomultiplier (silicon photomultiplier, SiPM), or the like. The processing module 230 may have a signal processing capability, and may be connected to the detector 222 through a CAN bus or in another manner.

It should be noted that the control module 240 and the processing module 230 may be integrated into one device for implementation, or may be separately implemented in a plurality of devices. For example, the control module 240 and the processing module 230 may be integrated into one device for implementation. The device may be specifically an integrated circuit chip, for example, a general-purpose processor, a field programmable gate array (field programmable gate array, FPGA), an application-specific integrated circuit (application-specific integrated circuit, ASIC), a system on a chip (system on a chip, SoC), a network processor (network processor, NP), a digital signal processor (digital signal processor, DSP), a micro controller unit (micro controller unit, MCU), a programmable logic device (programmable logic device, PLD), or another programmable logic device, a discrete gate or a transistor logic device, a discrete hardware component, or another integrated chip. The device may include a central processing unit (central processing unit, CPU), a neural-network processing unit (neural-network processing unit, NPU), and a graphics processing unit (graphics processing unit, GPU), or may include an application processor (application processor, AP), a modem processor, an image signal processor (image signal processor, ISP), a video codec, a digital signal processor (digital signal processor, DSP), a baseband processor, and/or the like. This is not specifically limited.

In an example, the detection apparatus includes the transmitting module 210, the receiving module 220, and the processing module 230. A detection signal (for example, a pulse signal) generated by the laser 211 in the transmitting module 210 is transmitted by using the emitting optical system 212 in the transmitting module 210. After an object in the detection area is scanned, the detection signal is reflected by the object, and a reflected echo signal is received by the receiving optical system 221 in the receiving module 220 and transmitted to the detector 222 in the receiving module 220. Then, the detector 222 may convert the echo signal into an electrical signal and send (or transmit) the electrical signal to the processing module 230. Then, the processing module 230 may analyze the electrical signal to generate point cloud data. The point cloud data may be used to obtain information such as a distance, a relative angle, an orientation, a height, a speed, an attitude, a shape, an intensity, and an interference degree of the object, and may be subsequently used to plan autonomous driving or assisted driving of a vehicle with reference to other sensor information of the vehicle.

In another example, the detection apparatus includes the transmitting module 210, the receiving module 220, the processing module 230, and the control module 240. The control module 240 may control the laser 211 in the transmitting module 210 to send a detection signal (for example, a pulse signal), and control the emitting optical system 212 in the transmitting module 210 to transmit the detection signal from the laser 211. After an object in the detection area is scanned, the detection signal is reflected by the object, and a reflected echo signal is received by the receiving optical system 221 in the receiving module 220 under control of the control module 240 and transmitted to the detector 222 in the receiving module 220. Then, under control of the control module 240, the detector 222 converts the echo signal into an electrical signal, and sends the electrical signal to the processing module 230. Then, the processing module 230 analyzes the electrical signal under control of the control module 240, to generate point cloud data. The point cloud data may be used to obtain information such as a distance, a relative angle, an orientation, a height, a speed, an attitude, a shape, an intensity, and an interference degree of the object.

The following describes specific implementations of the detection method in embodiments of this application based on the detection apparatus shown in FIG. 2 with reference to specific embodiments. Clearly, the described embodiments are merely some rather than all of embodiments of this application.

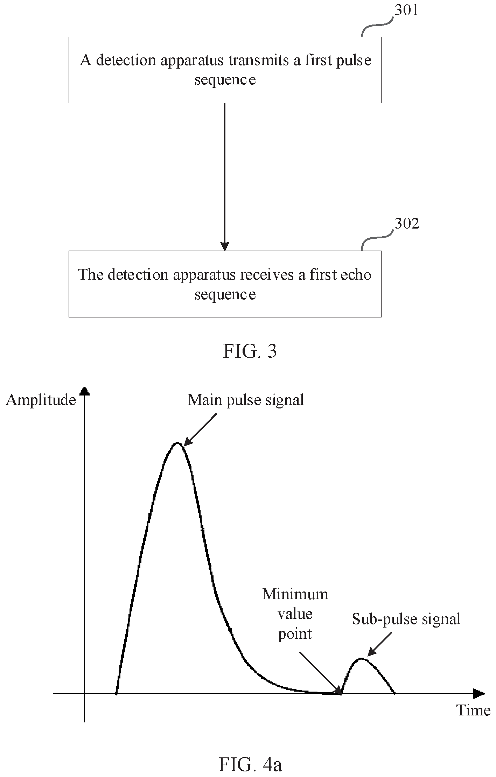

FIG. 3 shows an example of a schematic flowchart of a detection method according to an embodiment of this application. The detection method is applicable to a detection apparatus, for example, the detection apparatus 200 shown in FIG. 2. As shown in FIG. 3, the method includes the following steps.

Step 301: The detection apparatus transmits a first pulse sequence.

Optionally, the detection apparatus may transmit the first pulse sequence in a specific timing manner. For example, the detection apparatus transmits the first pulse sequence based on at least one first sequence (for example, one first sequence may include one or more non-zero values) and at least one first time interval, or may transmit the first pulse sequence in another manner.

For example, the first pulse sequence may include different pulse signals, or may include some same pulse signals and some different pulse signals.

For example, the first pulse sequence includes a first pulse signal. The first pulse signal includes a main pulse signal and a sub-pulse signal, and an amplitude (or referred to as energy) of the sub-pulse signal is less than an amplitude of the main pulse signal. Optionally, a pulse width of the sub-pulse signal may be adjusted according to a requirement before transmission, and the amplitude of the sub-pulse signal may also be adjusted according to a requirement before transmission. The sub-pulse signal may also be referred to as a tail signal. The main pulse signal and the sub-pulse signal are connected head-to-tail, and may be presented as a whole during actual transmission.

Optionally, when dead time is set for some detectors, a time interval between the main pulse signal and the sub-pulse signal included in the first pulse signal is less than the dead time of the detector, and a width of the first pulse signal is slightly larger than the dead time of the detector. When no dead time is set for some other detectors, the time interval between the main pulse signal and the sub-pulse signal included in the first pulse signal is not limited.

For example, the first pulse sequence may include one or more first pulse signals, and the first pulse signal may include one or more sub-pulse signals.

Optionally, the first pulse sequence may further include a second pulse signal, or may include a signal in another form. For example, the second pulse signal may be different from the first pulse signal in at least one of the following parameters: a transmit power, a peak power, a pulse width, a rising edge slope, a falling edge slope, a sub-pulse width, a sub-pulse amplitude, a rising edge area proportion, or a falling edge area proportion. For example, the second pulse signal may include a main pulse signal and a sub-pulse signal, or may include only a main pulse signal, or may be a pulse signal in another form.

For example, the following uses the first pulse signal as an example to describe related features of a pulse signal including a main pulse signal and a sub-pulse signal.

Example 1: The main pulse signal and the sub-pulse signal in the first pulse signal may have different shapes.

For ease of understanding, the following uses specific examples to describe Example 1.

In an example, refer to a first pulse signal shown in FIG. 4a. When the first pulse signal (or may be understood as a TX (transmit) waveform) shown in FIG. 4a has a plurality of peaks, the first pulse signal is divided into two pulse signals by using a minimum value point as a division boundary. A pulse signal with a maximum peak value is a main pulse signal, and a remaining pulse signal is a sub-pulse signal. It can be learned from the first pulse signal shown in FIG. 4a that the main pulse signal is in a "high thin" shape, and the sub-pulse signal is in a "short narrow" shape.

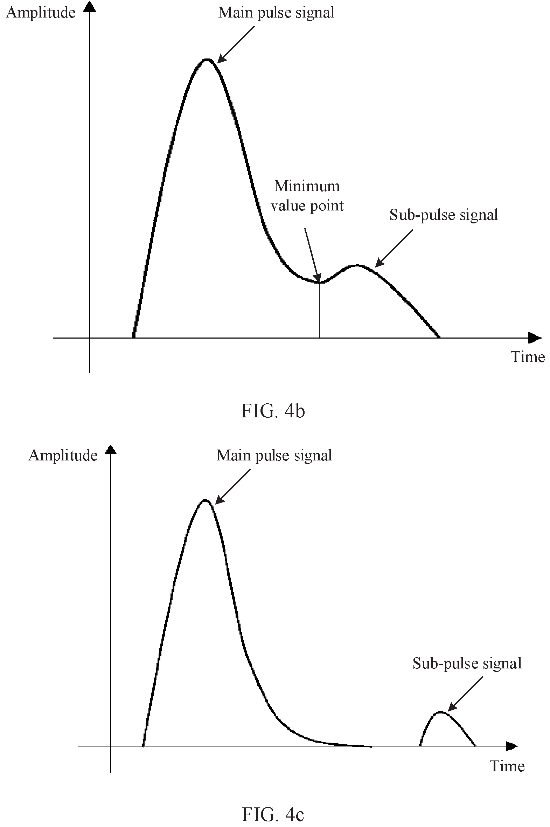

In another example, refer to the first pulse signal shown in FIG. 4b. When the first pulse signal shown in FIG. 4b has a plurality of peaks, the first pulse signal is divided into two pulse signals by using a minimum value point as a division boundary. A pulse signal with a maximum peak value is a main pulse signal, and a remaining pulse signal is a sub-pulse signal. It can be learned from the first pulse signal shown in FIG. 4b that the main pulse signal is in a "shoe" shape, and the sub-pulse signal is in a "short fat" shape.

In still another example, refer to a first pulse signal shown in FIG. 4c. When the first pulse signal shown in FIG. 4c has a plurality of peaks, the first pulse signal is divided into two pulse signals by using an interval between peaks as a division boundary. A pulse signal with a maximum peak value is a main pulse signal, and a remaining pulse signal is a sub-pulse signal. It can be learned from the first pulse signal shown in FIG. 4c that the main pulse signal is in a "high thin" shape, and the sub-pulse signal is in a "short narrow" shape.

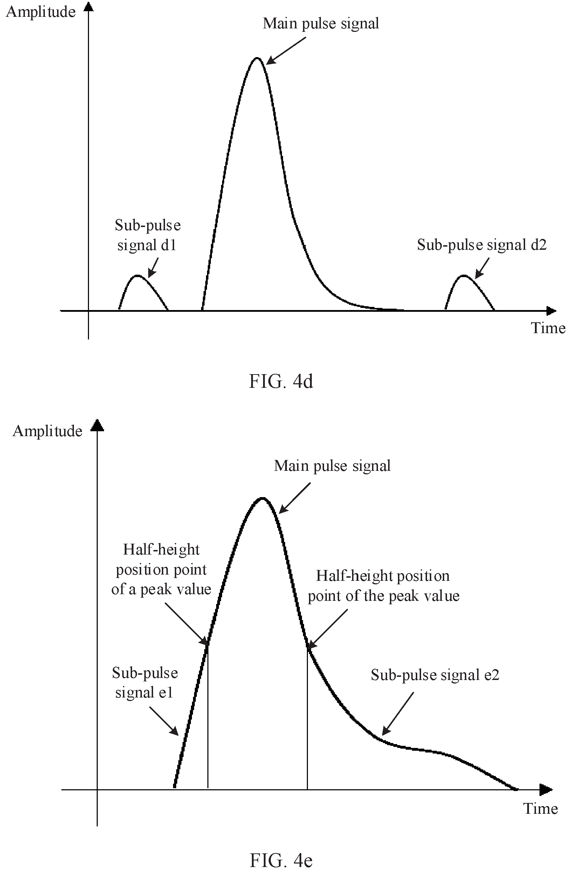

In still another example, refer to a first pulse signal shown in FIG. 4d. When the first pulse signal shown in FIG. 4d has a plurality of peaks, the first pulse signal is divided into three pulse signals by using an interval between peaks as a division boundary. A pulse signal with a maximum peak value is a main pulse signal, and remaining two pulse signals are both sub-pulse signals, for example, a sub-pulse signal d1 and a sub-pulse signal d2. It can be learned from the first pulse signal shown in FIG. 4d that the main pulse signal is in a "high thin" shape, and the sub-pulse signal 1 and the sub-pulse signal 2 are in a "short narrow" shape.

In still another example, refer to a first pulse signal shown in FIG. 4e. When the first pulse signal shown in FIG. 4e has only one peak, the first pulse signal is divided into three pulse signals by using a half-height position point of a peak value (that is, a position point at which a half of the peak value is located) as a division boundary. A pulse signal including the peak is a main pulse signal, and remaining two pulse signals are both sub-pulse signals, for example, a sub-pulse signal e1 and a sub-pulse signal e2. It can be learned from the first pulse signal shown in FIG. 4e that the main pulse signal is in a shape of a "pencil tip", the sub-pulse signal e1 is in a shape of a "right angle", and the sub-pulse signal e2 is in a "ramped triangular" shape.

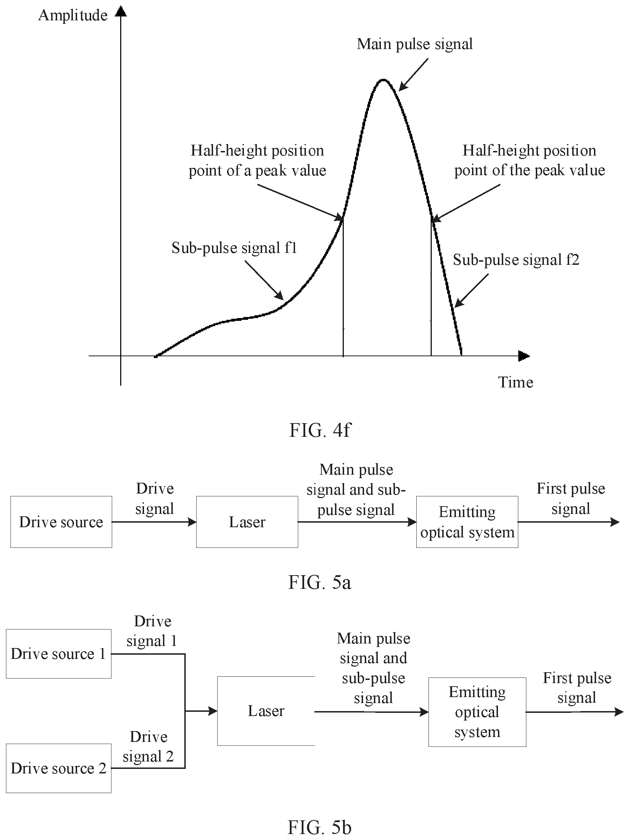

In still another example, refer to a first pulse signal shown in FIG. 4f. When the first pulse signal shown in FIG. 4f has only one peak, the first pulse signal is divided into three pulse signals by using a half-height position point of a peak value as a division boundary. A pulse signal including the peak is a main pulse signal, and remaining two pulse signals are sub-pulse signals, for example, a sub-pulse signal f1 and a sub-pulse signal f2. It can be learned from the first pulse signal shown in FIG. 4f that the main pulse signal is in a shape of a "pencil tip", the sub-pulse signal f1 is in a "ramped triangular" shape, and the sub-pulse signal f2 is in a shape of a "right angle".

Example 2: In the first pulse signal, the main pulse signal may be adjacent to the sub-pulse signal, or in the first pulse signal, the main pulse signal may partially overlap with the sub-pulse signal.

It may be understood that, that the main pulse signal is adjacent to the sub-pulse signal may mean that the main pulse signal is adjacent to the sub-pulse signal at a specific interval, or may mean that the main pulse signal and the sub-pulse signal are connected (or may be understood as being adjacent based on a connection relationship).

For ease of understanding, the following uses specific examples to describe Example 2.

In an example, still refer to the first pulse signal shown in FIG. 4a. It can be learned from the first pulse signal shown in FIG. 4a that in the first pulse signal, a tail of the main pulse signal is connected to a head of the sub-pulse signal.

In another example, still refer to the first pulse signal shown in FIG. 4b. It can be learned from the first pulse signal shown in FIG. 4b that the main pulse signal and the sub-pulse signal in the first pulse signal overlap (or may be referred to as partially overlap).

In still another example, still refer to the first pulse signal shown in FIG. 4c. It can be learned from the first pulse signal shown in FIG. 4c that there is a specific interval between the main pulse signal and the sub-pulse signal in the first pulse signal.

In still another example, still refer to the first pulse signal shown in FIG. 4d. It can be learned from the first pulse signal shown in FIG. 4d that in the first pulse signal, there is a specific interval between the main pulse signal and the sub-pulse signal d1 and a specific interval between the main pulse signal and the sub-pulse signal d2.

In still another example, still refer to the first pulse signal shown in FIG. 4e. It can be learned from the first pulse signal shown in FIG. 4e that in the first pulse signal, the main pulse signal separately overlaps the sub-pulse signal e1 and the sub-pulse signal e2.

In still another example, still refer to the first pulse signal shown in FIG. 4f. It can be learned from the first pulse signal shown in FIG. 4f that in the first pulse signal, the main pulse signal separately overlaps the sub-pulse signal f1 and the sub-pulse signal f2.

Example 3: A pulse width of the first pulse signal is greater than a pulse width of the main pulse signal, and an amplitude of the first pulse signal is equal to the amplitude of the main pulse signal.

For ease of understanding, the following uses specific examples to describe Example 3.

In an example, still refer to the first pulse signal shown in FIG. 4a or FIG. 4b. It can be learned from the first pulse signal shown in FIG. 4a or FIG. 4b that a pulse width of the first pulse signal is equal to a sum of a pulse width of the main pulse signal and a pulse width of the sub-pulse signal. Therefore, the pulse width of the first pulse signal is greater than the pulse width of the main pulse signal. In addition, because an amplitude of the first pulse signal is the same as an amplitude of the main pulse signal, the amplitude of the first pulse signal is equal to the amplitude of the main pulse signal. It may be understood that, it can also be learned from the first pulse signal shown in FIG. 4a or FIG. 4b that the pulse width of the main pulse signal is greater than the pulse width of the sub-pulse signal, and the amplitude of the main pulse signal is greater than an amplitude of the sub-pulse signal.

In another example, still refer to the first pulse signal shown in FIG. 4c. It can be learned from the first pulse signal shown in FIG. 4c that a sum of a pulse width of the main pulse signal, a pulse width of the sub-pulse signal, and the interval between the main pulse signal and the sub-pulse signal serves as a pulse width of the first pulse signal. Therefore, the pulse width of the first pulse signal is greater than the pulse width of the main pulse signal. In addition, because an amplitude of the first pulse signal is the same as an amplitude of the main pulse signal, the amplitude of the first pulse signal is equal to the amplitude of the main pulse signal. It may be understood that, it can also be learned from the first pulse signal shown in FIG. 4c that the pulse width of the main pulse signal is greater than the pulse width of the sub-pulse signal, and the amplitude of the main pulse signal is greater than an amplitude of the sub-pulse signal.

In still another example, still refer to the first pulse signal shown in FIG. 4d. It can be learned from the first pulse signal shown in FIG. 4d that a sum of a pulse width of the main pulse signal, a pulse width of the sub-pulse signal d1, a pulse width of the sub-pulse signal d2, the interval between the main pulse signal and the sub-pulse signal d1, and the interval between the main pulse signal and the sub-pulse signal d2 serves as a pulse width of the first pulse signal. Therefore, the pulse width of the first pulse signal is greater than the pulse width of the main pulse signal. In addition, because an amplitude of the first pulse signal is the same as an amplitude of the main pulse signal, the amplitude of the first pulse signal is equal to the amplitude of the main pulse signal. It may be understood that, it can also be learned from the first pulse signal shown in FIG. 4d that the pulse width of the main pulse signal is separately greater than the pulse width of the sub-pulse signal d1 and the pulse width of the sub-pulse signal d2, and the amplitude of the main pulse signal is separately greater than an amplitude of the sub-pulse signal d1 and an amplitude of the sub-pulse signal d2.

In still another example, still refer to the first pulse signal shown in FIG. 4e. It can be learned from the first pulse signal shown in FIG. 4e that a pulse width of the main pulse signal is greater than a pulse width of the sub-pulse signal e1, an amplitude of the main pulse signal is greater than an amplitude of the sub-pulse signal e1, the pulse width of the main pulse signal is less than a pulse width of the sub-pulse signal e2, the amplitude of the main pulse signal is greater than an amplitude of the sub-pulse signal e2, and an amplitude of the first pulse signal is equal to the amplitude of the main pulse signal.

In still another example, still refer to the first pulse signal shown in FIG. 4f. It can be learned from the first pulse signal shown in FIG. 4f that a pulse width of the main pulse signal is less than a pulse width of the sub-pulse signal f1, an amplitude of the main pulse signal is greater than an amplitude of the sub-pulse signal f1, a pulse width of the main pulse signal is greater than a pulse width of the sub-pulse signal f2, an amplitude of the main pulse signal is greater than an amplitude of the sub-pulse signal f2, and an amplitude of the first pulse signal is equal to the amplitude of the main pulse signal.

Example 4: There is a minimum value point at a connecting point between the main pulse signal and the sub-pulse signal in the first pulse signal.

For ease of understanding, the following uses specific examples to describe Example 4.

For example, still refer to the first pulse signal shown in FIG. 4a or FIG. 4b. It can be learned from the first pulse signal shown in FIG. 4a or FIG. 4b that there is a minimum value point at a connecting point between the main pulse signal and the sub-pulse signal in the first pulse signal.

Example 5: There is an interval between the main pulse signal and the sub-pulse signal in the first pulse signal.

In an example, still refer to the first pulse signal shown in FIG. 4c. It can be learned from the first pulse signal shown in FIG. 4c that there is the interval between the main pulse signal and the sub-pulse signal.

In another example, still refer to the first pulse signal shown in FIG. 4d. It can be learned from the first pulse signal shown in FIG. 4d that there is the interval between the main pulse signal and the sub-pulse signal d1, and there is also the interval between the main pulse signal and the sub-pulse signal d2.

Example 6: In the first pulse signal, the main pulse signal may be before the sub-pulse signal, or the main pulse signal may be after the sub-pulse signal.

For ease of understanding, the following uses specific examples to describe Example 6.

In an example, still refer to the first pulse signal shown in FIG. 4a, FIG. 4b, or FIG. 4c. It can be learned from the first pulse signal shown in FIG. 4a, FIG. 4b, or FIG. 4c that in the first pulse signal, the sub-pulse signal is after the main pulse signal.

In another example, still refer to the first pulse signal shown in FIG. 4d. It can be learned from the first pulse signal shown in FIG. 4d that the sub-pulse signal d1 is before the main pulse signal, and the sub-pulse signal d2 is after the main pulse signal. In other words, the main pulse signal is located between the sub-pulse signal d1 and the sub-pulse signal d2.

In still another example, still refer to the first pulse signal shown in FIG. 4e. It can be learned from the first pulse signal shown in FIG. 4e that the sub-pulse signal e1 is before the main pulse signal, and the sub-pulse signal e2 is after the main pulse signal. In other words, the main pulse signal is located between the sub-pulse signal e1 and the sub-pulse signal e2.

In still another example, still refer to the first pulse signal shown in FIG. 4f. It can be learned from the first pulse signal shown in FIG. 4f that the sub-pulse signal f1 is before the main pulse signal, and the sub-pulse signal f2 is after the main pulse signal. In other words, the main pulse signal is located between the sub-pulse signal f1 and the sub-pulse signal f2.

It may be understood that any plurality of examples in Example 1 to Example 6 may be combined into different implementations for use.

After related features of the first pulse signal are described, the following describes a driving manner for the first pulse signal.

Manner 1: One or more drive sources drive a same laser to generate the main pulse signal and the sub-pulse signal that are included in the first pulse signal.

For ease of understanding, the following uses specific examples to describe Manner 1.

In an example, refer to a driving manner for the main pulse signal and the sub-pulse signal shown in FIG. 5a. As shown in FIG. 5a, a drive signal generated by a drive source (or may be referred to as a drive circuit) is transmitted to a laser, and the laser generates the main pulse signal and the sub-pulse signal. Then, the laser transmits the main pulse signal and the sub-pulse signal to an emitting optical system (or may be referred to as an optical module), and the first pulse signal is obtained through processing of (or obtained through combination of, or generated based on, or formed based on) the main pulse signal and the sub-pulse signal by the emitting optical system for transmission. For example, the drive source may be a resistor capacitance circuit (resistor capacitance, RC) circuit (or referred to as an RC delay circuit), or may be a circuit in another form. This is not limited in embodiments of this application.

In another example, refer to a driving manner for the main pulse signal and the sub-pulse signal shown in FIG. 5b. As shown in FIG. 5b, a drive signal 1 generated by a drive source 1 and a drive signal 2 generated by a drive source are transmitted to a laser, and the laser generates the main pulse signal and the sub-pulse signal. Then, the laser transmits the main pulse signal and the sub-pulse signal to an emitting optical system, and the emitting optical system processes the main pulse signal and the sub-pulse signal into the first pulse signal for transmission.

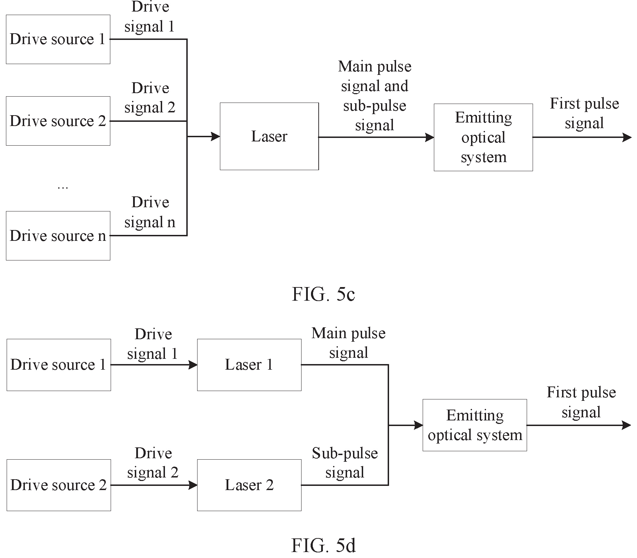

In still another example, refer to a driving manner for the main pulse signal and the sub-pulse signal shown in FIG. 5c. As shown in FIG. 5c, drive signals (for example, a drive signal 1, a drive signal 2, ..., and a drive signal n) respectively generated by n drive sources (for example, a drive source 1, a drive source 2, ..., and a drive source n) are transmitted to a laser, and the laser generates the main pulse signal and the sub-pulse signal. Then, the laser transmits the main pulse signal and the sub-pulse signal to an emitting optical system, and the emitting optical system processes the main pulse signal and the sub-pulse signal into the first pulse signal for transmission.

Manner 2: One drive source drives one laser to generate the main pulse signal included in the first pulse signal, and one or more drive sources drive one laser to generate the sub-pulse signal included in the first pulse signal.

For ease of understanding, the following uses specific examples to describe Manner 2.

In an example, refer to a driving manner for the main pulse signal and the sub-pulse signal shown in FIG. 5d. As shown in FIG. 5d, a drive signal 1 generated by a drive source 1 is transmitted to a laser 1, and the laser 1 generates the main pulse signal. Then, the laser 1 transmits the main pulse signal to an emitting optical system. A drive signal 2 generated by a drive source 2 is transmitted to a laser 2, and the laser 2 generates the sub-pulse signal. Then, the laser 2 transmits the sub-pulse signal to the emitting optical system. Then, after obtaining the main pulse signal and the sub-pulse signal, the emitting optical system may process the main pulse signal and the sub-pulse signal into the first pulse signal for transmission.

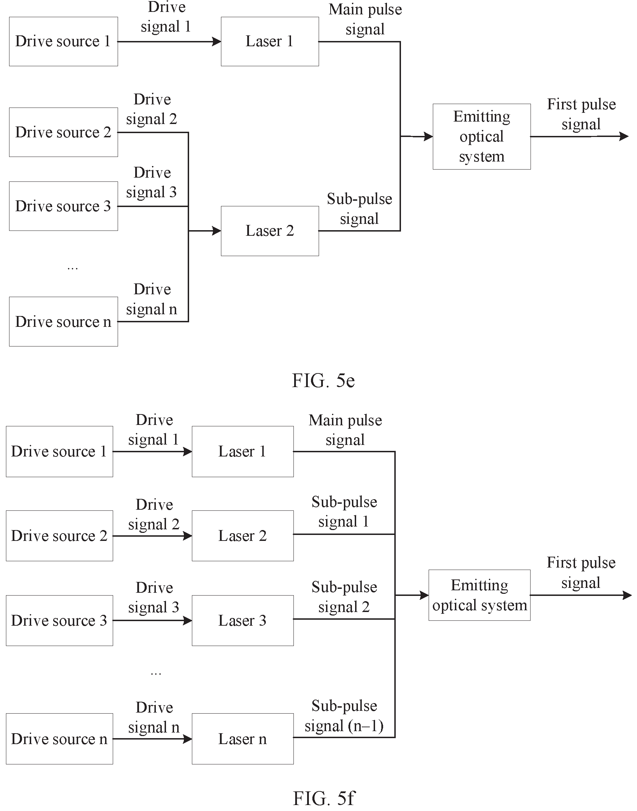

In another example, refer to a driving manner for the main pulse signal and the sub-pulse signal shown in FIG. 5e. As shown in FIG. 5e, a drive signal 1 generated by a drive source 1 is transmitted to a laser 1, and the laser 1 generates the main pulse signal. Then, the laser 1 transmits the main pulse signal to the emitting optical system. Drive signals (for example, a drive signal 2, a drive signal 3, ..., and a drive signal n) respectively generated by (n-1) drive sources (for example, a drive source 2, a drive source 3, ..., and a drive source n) are transmitted to the laser 2, and the laser 2 generates the sub-pulse signal. Then, the laser 2 transmits the sub-pulse signal to the emitting optical system. Then, after obtaining the main pulse signal and the sub-pulse signal, the emitting optical system may process the main pulse signal and the sub-pulse signal into the first pulse signal for transmission.

Manner 3: One drive source drives one laser to generate the main pulse signal included in the first pulse signal, and a plurality of drive sources separately and correspondingly drive one laser to generate the sub-pulse signal included in the first pulse signal.

For ease of understanding, the following uses specific examples to describe Manner 3.

For example, refer to a driving manner for the main pulse signal and the sub-pulse signal shown in FIG. 5f. As shown in FIG. 5f, a drive signal 1 generated by a drive source 1 is transmitted to a laser 1, and the laser 1 generates the main pulse signal. Then, the laser 1 transmits the main pulse signal to the emitting optical system. In addition, other (n-1) drive sources separately generate a drive signal to drive a corresponding laser to generate a sub-pulse signal. For example, a drive signal 2 generated by a drive source 2 is transmitted to a laser 2, the laser 2 generates a sub-pulse signal 1, and the laser 2 transmits the sub-pulse signal 1 to an emitting optical system; a drive signal 3 generated by a drive source 3 is transmitted to a laser 3, the laser 3 generates a sub-pulse signal 2, and the laser 3 transmits the sub-pulse signal 2 to the emitting optical system; ...; and a drive signal n generated by a drive source n is transmitted to a laser n, the laser n generates a sub-pulse signal (n-1), and the laser n transmits the sub-pulse signal to the emitting optical system. Then, after obtaining the main pulse signal and the (n-1) sub-pulse signals, the emitting optical system may process the main pulse signal and the (n-1) sub-pulse signals into the first pulse signal for transmission.

Step 302: The detection apparatus receives a first echo sequence. The first echo sequence is an echo sequence of the first pulse sequence.

Step 302 is an optional step.

For example, the first echo sequence may include a plurality of echo signals. For example, the plurality of echo signals may include a signal obtained by reflecting and/or scattering one or more first pulse signal by the target, or may include a signal obtained by reflecting and/or scattering one or more second pulse signal by the target, or may include a signal obtained by reflecting and/or scattering a signal in another form by the target. Optionally, the plurality of echo signals may further include an interference signal. For example, the interference signal may be a detection signal sent by another radar, an echo signal corresponding to a detection signal sent by another radar, an interference signal formed due to transmission of a detection signal of a current radar to a receiving optical system after the detection signal is internally reflected or scattered by the radar, or the like.

Optionally, the detection apparatus may perform target measurement based on the received first echo sequence. For example, the detection apparatus may select, from the plurality of received echo signals, a target echo signal that matches a to-be-measured indicator. Then, the detection apparatus may process the target echo signal to obtain a measurement result of a first target existing in a current scenario. Then, the detection apparatus may determine, based on whether the measurement result of the first target meets a corresponding measurement requirement, whether a pulse sequence (for example, a second pulse sequence) to be transmitted next time is different from the first pulse sequence. For example, the to-be-measured indicator may include but is not limited to a speed, a distance, an orientation, a relative angle, an attitude, a shape, an intensity, an interference degree, and the like of the first target.

When the measurement result of the first target meets the corresponding measurement requirement, the second pulse sequence transmitted by the detection apparatus may be the same as the first pulse sequence. When the measurement result of the first target does not meet the corresponding measurement requirement, the second pulse sequence transmitted by the detection apparatus is different from the first pulse sequence. For example, a pulse signal (or a signal in another form) included in the second pulse sequence is different from the pulse signal (or a signal in another form) included in the first pulse sequence in at least one of the following parameters: a transmit power, a peak power, a pulse width, a rising edge slope, a falling edge slope, a sub-pulse width, a sub-pulse amplitude, a rising edge area proportion, or a falling edge area proportion.

For example, the parameter is the transmit power, the first pulse sequence includes a pulse signal 1, and the second pulse sequence includes a pulse signal 2. When a transmit power of the pulse signal 2 included in the second pulse sequence to be transmitted next time is less than a transmit power of the pulse signal 1 included in the first pulse sequence transmitted last time, the detection apparatus can detect a short-distance target. This helps reduce (or avoid) spurious impact of a window, to improve ranging performance and reflectivity performance of the detection apparatus, reduce echo overlapping impact, and mitigate point cloud adhesion and multipath problems, so that the detection apparatus can dynamically adjust detection performance according to an actual scenario requirement. When a transmit power of the pulse signal 2 included in the second pulse sequence to be transmitted next time is greater than a transmit power of the pulse signal 1 included in the first pulse sequence transmitted last time, the detection apparatus can detect a long-distance target. This helps improve a remote detection capability of the detection apparatus, so that the detection apparatus can dynamically adjust detection performance according to an actual scenario requirement.

For another example, the parameter is the sub-pulse width or the sub-pulse amplitude, the first pulse sequence includes a pulse signal 1, and the second pulse sequence includes a pulse signal 2. When a width of a sub-pulse signal included in the pulse signal 2 included in the second pulse sequence to be transmitted next time is greater than a width of a sub-pulse signal included in the pulse signal 1 included in the first pulse sequence transmitted last time, or an amplitude of a sub-pulse signal included in the pulse signal 2 is greater than an amplitude of a sub-pulse signal included in the pulse signal 1, the detector in the detection apparatus can obtain a dynamic range, so that the detection apparatus can dynamically adjust the dynamic range of the detector according to an actual scenario requirement.

For still another example, the parameter is the rising edge slope, the first pulse sequence includes a pulse signal 1, and the second pulse sequence includes a pulse signal 2. When a rising edge slope of the pulse signal 2 included in the second pulse sequence to be transmitted next time is less than a rising edge slope of the pulse signal 1 included in the first pulse sequence transmitted last time, impact of insufficient sampling precision can be reduced, which helps improve measurement precision of the detection apparatus in a configuration of low sampling precision.

For still another example, the parameter is the pulse width, the first pulse sequence includes a pulse signal 1, and the second pulse sequence includes a pulse signal 2. When a pulse width of the pulse signal 2 included in the second pulse sequence to be transmitted next time is less than a pulse width of the pulse signal 1 included in the first pulse sequence transmitted last time, impact of an adhesion scenario can be reduced.

In an example, the to-be-measured indicator is the intensity. The detection apparatus may select, from the plurality of echo signals, an echo signal corresponding to a pulse signal (for example, the first pulse signal) including a main pulse signal and a sub-pulse signal. Then, the detection apparatus may process the echo signal corresponding to the first pulse signal, to obtain the intensity (or may be understood as an intensity indicator value) corresponding to the first target. Then, the detection apparatus may determine, based on whether the intensity corresponding to the first target meets a corresponding measurement requirement, whether the pulse sequence (for example, the second pulse sequence) to be transmitted next time is different from the first pulse sequence.

If the intensity corresponding to the first target meets the measurement requirement, for example, a measurement error of the intensity corresponding to the first target is within an allowed error range, the detection apparatus may continue to perform transmission based on a pulse sequence (for example, the first pulse sequence) transmitted last time. If the intensity corresponding to the first target does not meet the measurement requirement, for example, a measurement error of the intensity corresponding to the first target exceeds an allowed error range, when it is determined that the intensity corresponding to the first target is greater than an intensity threshold, the detection apparatus may select one or more signals (for example, the first pulse signal, a pulse signal in another form, or a signal in another form) with a low transmit power to be included in the pulse sequence to be transmitted next time. In this way, an intensity estimation capability can be improved. Optionally, when it is determined that the intensity corresponding to the first target is less than an intensity threshold, the detection apparatus may alternatively select one or more signals (for example, the first pulse signal, a pulse signal in another form, or a signal in another form) with a high transmit power to be included in the pulse sequence to be transmitted next time.

In another example, the to-be-measured indicator is the distance. The detection apparatus may select, from the plurality of echo signals, an echo signal corresponding to a third pulse signal. A transmit power of the third pulse signal is within a transmit power range (for example, a larger transmit power range [a, b] or a smaller transmit power range [c, d], where d is less than a). Then, the detection apparatus may process the echo signal corresponding to the third pulse signal, to obtain the distance (or may be understood as a distance indicator value) of the first target. Then, the detection apparatus may determine, based on whether the distance of the first target meets a corresponding measurement requirement, whether the pulse sequence (for example, the second pulse sequence) to be transmitted next time is different from the first pulse sequence.

If the distance of the first target meets the measurement requirement, for example, a measurement error of the distance of the first target is within an allowed error range, the detection apparatus may continue to perform transmission based on a pulse sequence (for example, the first pulse sequence) transmitted last time. If the distance of the first target does not meet the measurement requirement, for example, a measurement error of the distance of the first target exceeds an allowed error range, when it is determined that the distance of the first target is less than a distance threshold, the detection apparatus may select one or more signals (for example, the first pulse signal, a pulse signal in another form, or a signal in another form) with a low transmit power to be included in the pulse sequence to be transmitted next time. In this way, spurious impact of a window can be reduced, to improve ranging performance and reflectivity performance of the detection apparatus, reduce echo overlapping impact, and mitigate point cloud adhesion and multipath problems. Optionally, when it is determined that the distance of the first target is greater than a distance threshold, the detection apparatus may alternatively select one or more signals (for example, the first pulse signal, a pulse signal in another form, or a signal in another form) with a high transmit power to be included in the pulse sequence to be transmitted next time. In this way, a remote detection capability of the detection apparatus can be improved.

In still another example, the to-be-measured indicator is the interference degree. When an echo signal of the first target existing in the current scenario and an echo signal of a second target (for example, a window spurious echo, echoes of rain, fog, and dust, or an echo of a neighboring target) overlap, the detection apparatus may select, from the plurality of echo signals, an echo signal corresponding to a fourth pulse signal. A pulse width of the fourth pulse signal is less than or equal to a width threshold. For example, the fourth pulse signal may be a pulse signal with a narrow pulse width. Then, the detection apparatus may process the echo signal corresponding to the fourth pulse signal, to obtain the interference degree (or may be understood as an interference degree indicator value) corresponding to the first target. Then, the detection apparatus may determine, based on whether the interference degree corresponding to the first target meets a corresponding measurement requirement, whether the pulse sequence (for example, the second pulse sequence) to be transmitted next time is different from the first pulse sequence.

If the interference degree corresponding to the first target meets the measurement requirement, for example, the interference degree corresponding to the first target is less than or equal to a specified threshold, the detection apparatus may continue to perform transmission based on a pulse sequence (for example, the first pulse sequence) transmitted last time. If the interference degree corresponding to the first target does not meet the measurement requirement, for example, the interference degree corresponding to the first target is greater than a specified threshold, the detection apparatus may select one or more signals (for example, the first pulse signal, a pulse signal in another form, or a signal in another form) with a low transmit power to be included in the pulse sequence to be transmitted next time. In this way, echo overlapping impact can be reduced.

Optionally, in some cases, if the detection apparatus needs to be in a low power consumption mode, the detection apparatus may reduce a quantity of pulse signals in a transmitted pulse sequence. For example, the detection apparatus may select one or more different pulse signals to transmit.

It should be noted that, in embodiments of this application, "at least one" means one or more, and "a plurality of" means two or more. "And/or" describes an association relationship between associated objects, and represents that three relationships may exist. For example, A and/or B may represent the following cases: Only A exists, both A and B exist, and only B exists, where A and B may be singular or plural. "One or more of the following items (pieces)" or a similar expression thereof means any combination of these items, including any combination of singular items (pieces) or plural items (pieces). For example, one or more of a, b, or c may indicate a, b, c, a and b, a and c, b and c, or a, b, and c, where a, b, and c may be singular or plural.

In addition, unless otherwise stated, ordinal numbers such as "first" and "second" in embodiments of this application are intended to distinguish between a plurality of objects, but are not intended to limit priorities or importance degrees of the plurality of objects. For example, the first pulse signal and the second pulse signal are merely used to distinguish between different pulse signals, but do not indicate different priorities or importance degrees of these pulse signals.

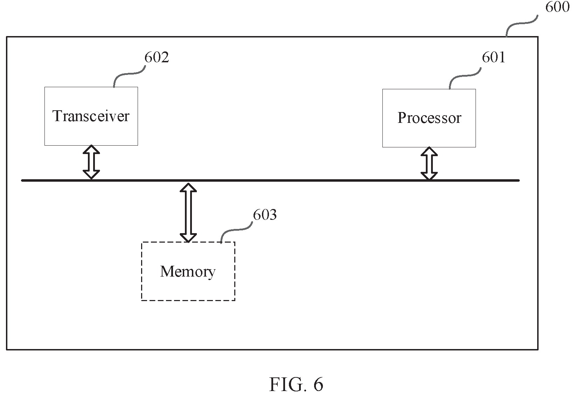

Based on the foregoing detection method, an embodiment of this application further provides a possible detection apparatus. FIG. 6 shows an example of a diagram of a structure of a possible detection apparatus according to an embodiment of this application. The detection apparatus 600 may be configured to implement functions of the detection apparatus in the foregoing method embodiments, and therefore can also implement beneficial effects of the foregoing method embodiments.

Refer to FIG. 6. The detection apparatus 600 includes a processor 601 and a transceiver 602. The control apparatus 600 is configured to implement functions of the detection apparatus in the method embodiment shown in FIG. 3. Optionally, the detection apparatus 600 may further include a memory 603. The memory 603 may be coupled to the processor 601, and store program instructions and data that are necessary for the detection apparatus.

When the detection apparatus 600 is configured to implement the functions of the detection apparatus in the method embodiment shown in FIG. 3, the processor 601 is configured to transmit a first pulse sequence by using the transceiver 602. The first pulse sequence includes a first pulse signal, the first pulse signal includes a main pulse signal and a sub-pulse signal, and an amplitude of the sub-pulse signal is less than an amplitude of the main pulse signal. Optionally, the processor 601 is configured to receive a first echo sequence by using the transceiver 602. The first echo sequence may include a plurality of echo signals. Then, the processor 601 may be configured to select, from the plurality of echo signals, a target echo signal that matches a to-be-measured indicator, and may be configured to process the target echo signal to obtain a measurement result of a first target.

When the detection apparatus 600 is configured to implement the functions of the detection apparatus in the method embodiment shown in FIG. 3, for more detailed descriptions of the processor 601 and the transceiver 602, refer to related descriptions of the detection apparatus in the method embodiment shown in FIG. 3. Details are not described herein again.

It should be understood that, in this embodiment of this application, the processor 601 may be implemented by a processor or a processor-related circuit module, and the transceiver 602 may be implemented by an interface circuit or an interface circuit-related circuit module.

According to the detection solution provided in the embodiments of this application, an embodiment of this application may further provide a terminal device. The terminal device may include the detection apparatus in any one of the foregoing embodiments. Further, optionally, the terminal device may further include a memory, and the memory is configured to store a program or instructions. Certainly, the terminal device may further include another component, for example, a wireless control apparatus.

For example, the terminal device may be, for example, a vehicle (for example, an unmanned vehicle, a smart vehicle, an electric vehicle, or a digital vehicle), a robot, a surveying and mapping device, an unmanned aerial vehicle, a smart home device (for example, a television, a robotic vacuum cleaner, a smart desk lamp, an acoustic system, an intelligent lighting system, an electrical appliance control system, home background music, a home theater system, an intercom system, or a video surveillance device), an intelligent manufacturing device (for example, an industrial device), an intelligent transportation device (for example, an AGV, an unmanned transport vehicle, or a truck), an intelligent terminal (for example, a mobile phone, a computer, a tablet computer, a palmtop computer, a desktop computer, a headset, acoustic equipment, a wearable device, a vehicle-mounted device, a virtual reality device, or an augmented reality device).

According to the detection solution provided in embodiments of this application, an embodiment of this application further provides a computer-readable storage medium. The computer-readable storage medium stores a computer program. When the computer program is run, the method performed by the detection apparatus in the foregoing content is performed.

According to the detection solution provided in embodiments of this application, an embodiment of this application further provides a computer program product. When the computer program product is run on a processor, the method performed by the detection apparatus in the foregoing content is implemented.

Terms such as "component", "module", and "system" used in this specification indicate computer-related entities, hardware, firmware, combinations of hardware and software, software, or software being executed. For example, a component may be, but is not limited to, a process run on a processor, a processor, an object, an executable file, an execution thread, a program, and/or a computer. As illustrated by using figures, both a computing device and an application run on the computing device may be components. One or more components may reside within a process and/or a thread of execution, and a component may be located on one computer and/or distributed between two or more computers. In addition, the components may be executed from various computer-readable media that store various data structures. For example, the components may communicate by using a local and/or remote process and based on, for example, a signal having one or more data packets (for example, data from two components interacting with another component in a local system, a distributed system, and/or across a network such as the Internet interacting with other systems by using the signal).

A person of ordinary skill in the art may be aware that, in combination with illustrative logical blocks (illustrative logical blocks) described in embodiments disclosed in this specification and steps (steps) may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In several embodiments provided in this application, it should be understood that the disclosed system, apparatus, and method may be implemented in other manners. For example, the described apparatus embodiments are merely examples. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected according to actual requirements to achieve the objectives of the solutions of embodiments.

In addition, functional units in embodiments of this application may be integrated into one processing unit, each of the units may exist alone physically, or two or more units may be integrated into one unit.

When the functions are implemented in a form of software functional unit and sold or used as an independent product, the functions may be stored in a computer-readable storage medium. Based on such an understanding, the technical solutions of this application essentially, or the part contributing to the current technology, or some of the technical solutions may be implemented in a form of software product. The computer software product is stored in a storage medium, and includes several instructions for indicating a computer device (which may be a personal computer, a server, or a network device) to perform all or a part of the steps of the methods described in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

Although this application is described with reference to specific features and embodiments thereof, it is clear that various modifications and combinations may be made to them without departing from the spirit and scope of this application. Correspondingly, this specification and the accompanying drawings are only example descriptions of solutions defined by the appended claims, and are considered as any or all of modifications, variations, combinations, or equivalents that cover the scope of this application.

Clearly, a person skilled in the art can make various modifications and variations to this application without departing from the spirit and scope of the present invention. In this case, this application is intended to cover these modifications and variations of embodiments of this application provided that they fall within the scope of protection defined by the claims of this application and their equivalent technologies.

## Claims

1. A detection method, comprising:
transmitting a first pulse sequence, wherein the first pulse sequence comprises a first pulse signal, the first pulse signal comprises a main pulse signal and a sub-pulse signal, and an amplitude of the sub-pulse signal is less than an amplitude of the main pulse signal.

2. The method according to claim 1, wherein the main pulse signal and the sub-pulse signal have different shapes.

3. The method according to claim 1 or 2, wherein the main pulse signal is adjacent to the sub-pulse signal, or the main pulse signal partially overlaps the sub-pulse signal.

4. The method according to any one of claims 1 to 3, wherein there is a minimum value point at a connecting point between the main pulse signal and the sub-pulse signal.

5. The method according to any one of claims 1 to 4, wherein the first pulse sequence further comprises a second pulse signal, and the second pulse signal is different from the first pulse signal in at least one of the following parameters: a transmit power, a peak power, a pulse width, a rising edge slope, a falling edge slope, a sub-pulse width, a sub-pulse amplitude, a rising edge area proportion, or a falling edge area proportion.

6. The method according to any one of claims 1 to 5, wherein a pulse width of the first pulse signal is greater than a pulse width of the main pulse signal, and an amplitude of the first pulse signal is equal to the amplitude of the main pulse signal.

7. The method according to any one of claims 1 to 6, wherein the main pulse signal is before the sub-pulse signal, or the main pulse signal is after the sub-pulse signal.

8. The method according to any one of claims 1 to 7, wherein a time interval between the main pulse signal and the sub-pulse signal is less than dead time of a detector.

9. The method according to any one of claims 1 to 8, wherein a pulse width and an amplitude of the sub-pulse signal are adjustable.

10. The method according to any one of claims 1 to 9, wherein one or more drive sources drive a same laser to generate the main pulse signal and the sub-pulse signal;
one drive source drives one laser to generate the main pulse signal, and one or more drive sources drive one laser to generate the sub-pulse signal; or
one drive source drives one laser to generate the main pulse signal, and a plurality of drive sources separately and correspondingly drive one laser to generate the sub-pulse signal.

11. The method according to any one of claims 1 to 10, wherein the method further comprises:
receiving a first echo sequence, wherein the first echo sequence comprises a plurality of echo signals;
selecting, from the plurality of echo signals, a target echo signal that matches a to-be-measured indicator; and
processing the target echo signal to obtain a measurement result of a first target.

12. The method according to claim 11, wherein the to-be-measured indicator is an intensity, and the target echo signal is an echo signal corresponding to the first pulse signal.

13. The method according to claim 11 or 12, wherein the to-be-measured indicator is a distance, the target echo signal is an echo signal corresponding to a third pulse signal, and a transmit power of the third pulse signal is within a transmit power range.

14. The method according to any one of claims 11 to 13, wherein the to-be-measured indicator is an interference degree, and if echo signals of the first target and a second target overlap, the target echo signal is an echo signal corresponding to a fourth pulse signal, wherein a pulse width of the fourth pulse signal is less than or equal to a width threshold.

15. The method according to any one of claims 11 to 14, wherein the method further comprises:
transmitting a second pulse sequence when the measurement result does not meet a measurement requirement, wherein the second pulse sequence is different from the first pulse sequence.

16. A detection apparatus, comprising a transmitting module, wherein
the transmitting module is configured to transmit a first pulse sequence, wherein the first pulse sequence comprises a first pulse signal, the first pulse signal comprises a main pulse signal and a sub-pulse signal, and an amplitude of the sub-pulse signal is less than an amplitude of the main pulse signal.

17. The detection apparatus according to claim 16, wherein the main pulse signal and the sub-pulse signal have different shapes.

18. The detection apparatus according to claim 16 or 17, wherein the main pulse signal is adjacent to the sub-pulse signal, or the main pulse signal partially overlaps the sub-pulse signal.

19. The detection apparatus according to any one of claims 16 to 18, wherein there is a minimum value point at a connecting point between the main pulse signal and the sub-pulse signal.

20. The detection apparatus according to any one of claims 16 to 19, wherein the first pulse sequence further comprises a second pulse signal, and the second pulse signal is different from the first pulse signal in at least one of the following parameters: a transmit power, a peak power, a pulse width, a rising edge slope, a falling edge slope, a sub-pulse width, a sub-pulse amplitude, a rising edge area proportion, or a falling edge area proportion.

21. The detection apparatus according to any one of claims 16 to 20, wherein a pulse width of the first pulse signal is greater than a pulse width of the main pulse signal, and an amplitude of the first pulse signal is equal to the amplitude of the main pulse signal.

22. The detection apparatus according to any one of claims 16 to 21, wherein the main pulse signal is before the sub-pulse signal, or the main pulse signal is after the sub-pulse signal.

23. The detection apparatus according to any one of claims 16 to 22, wherein a time interval between the main pulse signal and the sub-pulse signal is less than dead time of a detector.

24. The detection apparatus according to any one of claims 16 to 23, wherein a pulse width and an amplitude of the sub-pulse signal are adjustable.

25. The detection apparatus according to any one of claims 16 to 24, wherein one or more drive sources drive a same laser to generate the main pulse signal and the sub-pulse signal;
one drive source drives one laser to generate the main pulse signal, and one or more drive sources drive one laser to generate the sub-pulse signal; or
one drive source drives one laser to generate the main pulse signal, and a plurality of drive sources separately and correspondingly drive one laser to generate the sub-pulse signal.

26. The detection apparatus according to any one of claims 16 to 25, wherein the detection apparatus further comprises a receiving module and a processing module;
the receiving module is configured to receive a first echo sequence, wherein the first echo sequence comprises a plurality of echo signals;
the processing module is configured to select, from the plurality of echo signals, a target echo signal that matches a to-be-measured indicator; and
the processing module is further configured to process the target echo signal to obtain a measurement result of a first target.

27. The detection apparatus according to claim 26, wherein the to-be-measured indicator is an intensity, and the target echo signal is an echo signal corresponding to the first pulse signal.

28. The detection apparatus according to claim 26 or 27, wherein the to-be-measured indicator is a distance, the target echo signal is an echo signal corresponding to a third pulse signal, and a transmit power of the third pulse signal is within a transmit power range.

29. The detection apparatus according to any one of claims 26 to 28, wherein the to-be-measured indicator is an interference degree, and if echo signals of the first target and a second target overlap, the target echo signal is an echo signal corresponding to a fourth pulse signal, wherein a pulse width of the fourth pulse signal is less than or equal to a width threshold.

30. The detection apparatus according to any one of claims 26 to 29, wherein
the transmitting module is further configured to transmit a second pulse sequence when the measurement result does not meet a measurement requirement, wherein the second pulse sequence is different from the first pulse sequence.

31. A terminal device, comprising the detection apparatus according to any one of claims 16 to 30.

32. A computer-readable storage medium, wherein the computer-readable storage medium stores a computer program or instructions, and when the computer program or the instructions are executed by a computer, the computer is enabled to perform the method according to any one of claims 1 to 15.

33. A computer program product, wherein the computer program product comprises a computer program or instructions, and when the computer program or the instructions are run on a computer, the computer is enabled to perform the method according to any one of claims 1 to 15.
